# EUROPÄISCHE PATENTSCHRIFT

(11) **EP 2 448 099 B1**
(45) Veröffentlichungstag und Bekanntmachung des Hinweises auf die Patenterteilung: **18.12.2019**
(21) Anmeldenummer: 10189223.0
(22) Anmeldetag: 28.10.2010
(51) Int. Cl.: H02M 3/07

(54) **Spannungswandler**
Voltage converter
Convertisseur de tension

(43) Veröffentlichungstag der Anmeldung: 02.05.2012
(73) Patentinhaber: Kocur, Vit, 332 02 Stary Plzenec (CZ)
(72) Erfinder: Kocur, Vit, 332 02 Stary Plzenec (CZ)
(74) Vertreter: Rupprecht, Kay

(56) Entgegenhaltungen:
- EP-A2- 2 178 195
- US-A1- 2009 102 439
- US-B1- 6 429 632
- FINNEY S J ET AL: "High power GTO thyristor chopper applications with passive snubber energy recovery", IEE PROCEEDINGS: ELECTRIC POWER APPLICATIONS, INSTITUTION OF ELECTRICAL ENGINEERS, GB, Bd. 144, Nr. 6, 7. November 1997 (1997-11-07), Seiten 381-388, XP006008637, ISSN: 1350-2352, DOI: DOI:10.1049/IP-EPA:19971419

## Beschreibung

Die vorliegende Erfindung betrifft einen Spannungswandler nach dem Oberbegriff von Anspruch 1. Aus der DE 10 2008 053 609 A1 ist ein Spannungswandler vorbekannt. Dieser umfasst zwei Kapazitäten, mehrere Schalteinrichtungen, eine Drossel sowie eine Steuerung, die den Spannungswandler ansteuert.

Ausgehend vom Stand der Technik ist es eine Aufgabe der vorliegenden Erfindung, einen weiteren Spannungswandler bereit zu stellen.

Erfindungsgemäß wird diese Aufgabe durch einen Spannungswandler nach Anspruch 1 gelöst. Ausführungsformen des erfindungsgemäßen Spannungswandlers sind in den abhängigen Ansprüchen angegeben.

In der folgenden Beschreibung kann der Ausdruck "Ausführungsform", bzw. "Ausführungsbeispiel" für Gegenstände benutzt worden sein, die nicht in den Schutzumfang der Ansprüche fallen. Nur Beispiele, die alle Merkmale des unabhängigen Anspruchs enthalten, sind Teil der Erfindung und damit "Ausführungsformen", bzw. "Ausführungsbeispiele". Teile der Beschreibung, die nicht in den Schutzumfang der Ansprüche fallen, stellen den Stand der Technik dar und/oder dienen dem Verständnis der Erfindung.

Die Erfindung umfasst einen Spannungswandler mit einem Wandlereingang, einem Masseanschluss, einem ersten und zweiten Medium, einer ersten Drossel sowie einer ersten und zweiten Schalteinrichtung. Das erste Medium und die erste Drossel sind auf einem ersten Zweig zwischen dem Wandlereingang und einer ersten Verzweigung derartig angeordnet, dass sich die Drossel zwischen dem ersten Medium und der ersten Verzweigung befindet. Die erste Schalteinrichtung befindet sich auf einem zweiten Zweig zwischen der ersten Verzweigung und dem Masseanschluss. Weiterhin sind die zweite Schalteinrichtung und das zweite Medium auf einem dritten Zweig zwischen der ersten Verzweigung und dem Masseanschluss vorgesehen.

In einer Ausführungsform umfasst der Spannungswandler weiterhin eine Steuereinrichtung, die dazu eingerichtet ist, in einer ersten Schaltphase die erste Schalteinrichtung zu schließen und die zweite Schalteinrichtung zu öffnen und in einer zweiten Schaltphase die erste Schalteinrichtung zu öffnen und die zweite Schalteinrichtung zu schließen.

Der erfindungsgemäße Spannungswandler sieht also zwei Medien vor. Durch eine pulsbreitenmodulierte Beschaltung in Serie oder parallel kann der Strom aus einem Spannungsnetz in die Medien hinein und aus den Medien heraus fließen. Somit kann Energie in den Medien gespeichert werden. Beim Laden kann zuerst die parallele Kombination der Medien über die Drossel zugeschaltet werden. Der Strom fließt in Richtung der Medien, solange die Spannung an der Parallelkombination kleiner ist als die Netzspannung. Dann kann von der parallelen auf eine serielle Kombination gewechselt werden. Die serielle Kombination kann beim Laden als Freilauf für die Drossel dienen. Beim Entladen der Medien kann der Verlauf genau umgekehrt sein. Die Drossel wird beispielsweise von der seriellen Kombination der Medien bestromt und als Freilauf dient die Parallelkombination.

Durch die Erfindung können möglicherweise verschiedene Vorteile erreicht werden wie zum Beispiel ein hoher Wirkungsgrad, die mögliche Verwendung von Halbleiterschaltelementen mit niedriger Breakdown-Spannung, ein geringer Ripple-Strom und eine höhere mögliche Strombelastung. Darüber hinaus kann der Spannungswandler kostengünstig realisiert werden. Wenn sich die beiden Medien unterscheiden, kann ein Hybridenergiespeicher gebildet werden.

In einer Ausführungsform ist auf dem dritten Zweig zwischen der zweiten Schalteinrichtung und dem zweiten Medium eine zweite Verzweigung angeordnet. Zwischen dem Wandlereingang und der zweiten Verzweigung kann auf einem vierten Zweig eine dritte Schalteinrichtung angeordnet sein. Darüber hinaus kann sich auf dem vierten Zweig eine zweite Drossel befinden. Auf dem ersten Zweig zwischen dem ersten Medium und der ersten Drossel kann eine dritte Verzweigung und auf dem vierten Zweig zwischen der dritten Schalteinrichtung und der zweiten Drossel kann eine vierte Verzweigung angeordnet sein. Hierbei kann sich zwischen der dritten und der vierten Verzweigung eine vierte Schalteinrichtung befinden.

Die vorliegende Erfindung umfasst weiterhin einen Spannungswandler, der wie oben beschrieben ausgestaltet ist (nicht gespiegelte Variante), bei dem jedoch eine Position des Wandlereingangs und eine Position des Masseanschlusses mit einander vertauscht sind. Diese Ausführungsform soll im Folgenden als gespiegelter Spannungswandler bezeichnet werden.

Darüber hinaus umfasst die Erfindung einen Spannungswandler, bei dem ein nicht gespiegelter Spannungswandler mit einem gespiegelten Spannungswandler derartig kombiniert wird, dass ein Medium durch den gespiegelten sowie den nicht gespiegelten Spannungswandler gemeinsam genutzt wird und sowohl im nicht gespiegelten als auch im gespiegelten Spannungswandler entweder das erste oder das zweite Medium bildet.

Bei einem erfindungsgemäßen Spannungswandler kann das erste Medium mindestens einen Kondensator, eine Batteriezelle, eine Solarzelle oder eine Brennstoffzelle umfassen. Genauso kann das zweite Medium mindestens einen Kondensator, eine Batteriezelle, eine Solarzelle oder eine Brennstoffzelle umfassen. Die Schalteinrichtungen können jeweils aus einem MOSFET bestehen.

Weitere Details der Erfindung werden im Folgenden mit Bezug auf die in den Figuren dargestellten Ausführungsformen erläutert.
- Figur 1: zeigt einen Spannungswandler nach dem Stand der Technik.
- Figur 2: zeigt eine erste Ausführungsform eines erfindungsgemäßen Spannungswandlers.
- Figur 3a: illustriert eine parallele Schaltphase der ersten Ausführungsform des erfindungsgemäßen Spannungswandlers.
- Figur 3b: illustriert eine serielle Schaltphase der ersten Ausführungsform des erfindungsgemäßen Spannungswandlers.
- Figur 3c: illustriert eine weitere mögliche Beschaltung der ersten Ausführungsform des erfindungsgemäßen Spannungswandlers, wenn eine weitere Schalteinrichtung vorgesehen ist.
- Figur 4: zeigt eine zweite Ausführungsform des erfindungsgemäßen Spannungswandlers.
- Figur 5: zeigt eine dritte Ausführungsform eines erfindungsgemäßen Spannungswandlers.
- Figur 6: zeigt eine vierte Ausführungsform eines erfindungsgemäßen Spannungswandlers.
- Figur 7: zeigt eine fünfte Ausführungsform eines erfindungsgemäßen Spannungswandlers.
- Figur 8: zeigt eine sechste Ausführungsform eines erfindungsgemäßen Spannungswandlers.

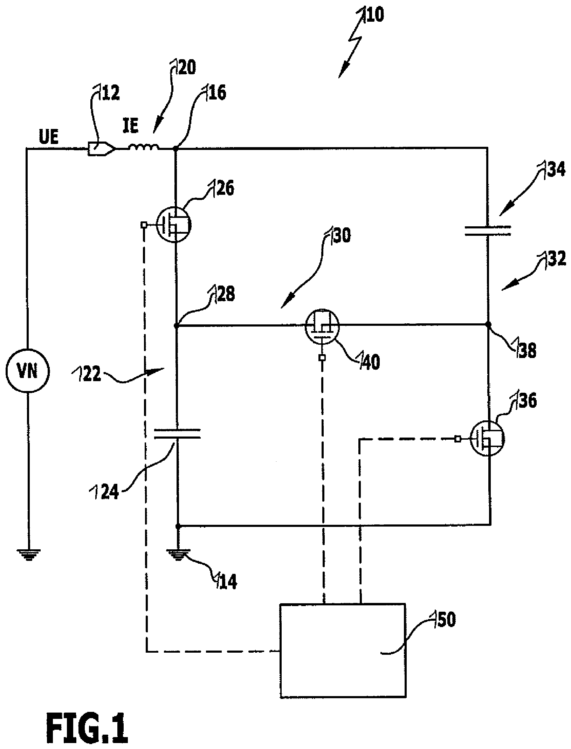

Figur 1 illustriert einen Spannungswandler, wie er aus der DE 10 2008 053 609 A1 vorbekannt ist. Dieser Spannungswandler nach dem Stand der Technik umfasst einen Wandlereingang 112, an welchem gegenüber Masse 114 eine Eingangsspannung UE eines Versorgungsnetzes VN anliegt.

Zwischen dem Wandlereingang 112 und einer Verzweigung 116 liegt eine als Ganzes mit 120 bezeichnete Drossel, durch welche der gesamte, in den gezeigten Spannungswandler 110 hineinfließende oder aus diesem herausfließende Strom IE hindurchfließt.

Ausgehend von der Verzweigung 116 führt ein Basisspeicherzweig 122 zur Masse 114, wobei in dem Basisspeicherzweig 122 eine Basiskapazität 124 angeordnet ist. Ein Strom durch den Basisspeicherzweig 122 lässt sich dadurch unterbrechen, dass ein erster Schalter 126 eines ersten Schalternetzes 130 zwischen der Verzweigung 116 und der Basiskapazität 124 angeordnet ist, wobei zwischen dem ersten Schalter 126 und der Basiskapazität 124 ein erster Mittelabgriff 128 liegt.

Von der Verzweigung 116 führt außerdem ein erster Ergänzungsspeicherzweig 132 zur Masse, wobei in dem ersten Ergänzungsspeicherzweig eine erste Ergänzungskapazität 134 angeordnet ist. Zwischen der ersten Ergänzungskapazität 134 und der Masse 114 ist ein zweiter Schalter 136 des Schalternetzes 130 vorgesehen, wobei zwischen der ersten Ergänzungskapazität 134 und dem zweiten Schalter 136 ein zweiter Mittelabgriff 138 liegt. Ferner ist noch ein dritter Schalter 140 des ersten Schalternetzes 130 vorgesehen, welcher zwischen dem ersten Mittelabgriff 128 und dem zweiten Mittelabgriff 138 liegt.

Der erste Schalter 126, der zweite Schalter 136 und der dritte Schalter 140 des ersten Schalternetzes 130 sind durch eine als Ganzes mit 150 bezeichnete Steuerung in zwei Schaltphasen SP1 und SP2 steuerbar, und zwar so, dass entweder in der ersten Schaltphase SP1 der erste Schalter 126 und der zweite Schalter 136 geschlossen sind und der dritte Schalter 140 geöffnet ist oder in der zweiten Schaltphase SP2 der erste Schalter 126 und der zweite Schalter 136 geöffnet sind und der dritte Schalter 140 geschlossen ist.

In der ersten Schaltphase liegen die Basiskapazität 124 im Basisspeicherzweig 122 und die erste Ergänzungskapazität 134 im ersten Ergänzungsspeicherzweig 132 parallel zwischen der Verzweigung 116 und der Masse 114, so dass sich der Strom IE, welcher durch die Drossel 120 fließt, auf die beiden Speicherzweige 122 und 132 aufteilt und jeweils auf die Basiskapazität 124 und die erste Ergänzungskapazität 134 einwirkt, wobei in diesem Fall sowohl über der Basiskapazität 124 als auch über der ersten Ergänzungskapazität 134 die Spannung UE anliegt.

In der zweiten Schaltphase erfolgt dann seitens der Steuerung 150 ein Öffnen des ersten Schalters 126 und des zweiten Schalters 136 und ein Schließen des dritten Schalters 140, so dass in diesem Fall die Basiskapazität 124 und die erste Ergänzungskapazität 134 über den geschossenen dritten Schalter 140 in Reihe geschaltet sind und somit beide Kapazitäten 124, 134 in Reihe geschaltet zwischen der Verzweigung 116 und der Masse 114 liegen.

In der zweiten Schaltphase liegt an der Verzweigung 116 die Summe der Spannungen an der Basiskapazität 124 und an der ersten Ergänzungskapazität 134 an.

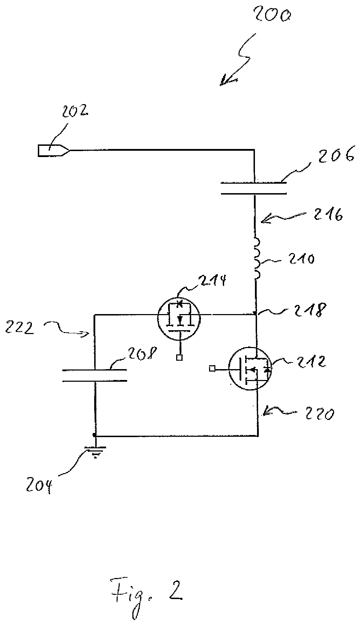

Figur 2 zeigt eine erste Ausführungsform 200 eines erfindungsgemäßen Spannungswandlers. Diese soll im Folgenden als K2-Single-Spannungswandler bezeichnet werden. Der dargestellte Spannungswandler umfasst einen Wandlereingang 202 und einen Masseanschluss 204. Ein erstes 206 und ein zweites Medium 208 sind zwischen diesem Wandlereingang 202 und dem Masseanschluss 204 angeordnet. Darüber hinaus umfasst der Spannungswandler eine erste Drossel 210 sowie eine erste und zweite Schalteinrichtung 212, 214. Das erste Medium 206 sowie die erste Drossel 210 sind auf einem ersten Zweig 216 zwischen dem Wandlereingang 202 und einer ersten Verzweigung 218 angeordnet. Die erste Schalteinrichtung 212 befindet sich auf einem zweiten Zweig 220 zwischen der ersten Verzweigung 218 und dem Masseanschluss 204. Die zweite Schalteinrichtung 214 und das zweite Medium 208 sind auf einem dritten Zweig 222 zwischen der ersten Verzweigung 218 und dem Masseanschluss 204 angeordnet.

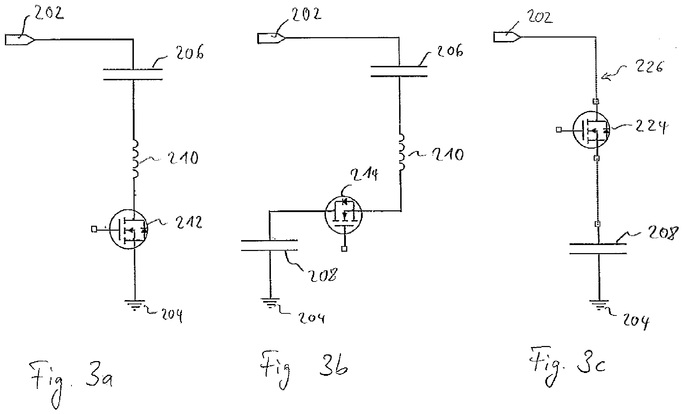

Figur 3a illustriert die erste Ausführungsform des erfindungsgemäßen Spannungswandlers in einer parallelen Schaltphase. In dieser Schaltphase ist die erste Schalteinrichtung 212 leitend und die zweite Schalteinrichtung 214 nicht leitend. Somit befinden sich zwischen dem Wandlereingang 202 und dem Masseanschluss 204 nur das erste Medium 206, die erste Drossel 210 und die erste Schalteinrichtung 212.

Figur 3b illustriert eine serielle Schaltphase der ersten Ausführungsform des erfindungsgemäßen Spannungswandlers 200. In dieser seriellen Schaltphase ist die erste Schalteinrichtung 212 nicht leitend und die zweite Schalteinrichtung 214 leitend. Daher liegen zwischen dem Wandlereingang 202 und dem Masseanschluss 204 das erste Medium 206, die erste Drossel 210, die zweite Schalteinrichtung 214 und das zweite Medium 208.

Figur 3c erläutert eine Beschaltung der ersten Ausführungsform eines erfindungsgemäßen Spannungswandlers, wenn eine dritte Schalteinrichtung 224 auf einem vierten Zweig 226 zwischen dem Wandlereingang 202 und dem zweiten Medium 208 vorgesehen ist. Durch die dritte Schalteinrichtung 224 kann das zweite Medium 208 unabhängig von dem ersten Medium 206 geladen und entladen werden.

Während der in Figur 3a gezeigten parallelen Schaltphase kann das erste Medium 206 beispielsweise geladen werden. In dieser Phase ist das erste Medium 206 über die erste Drossel 210 mit dem Masseanschluss 204 verbunden. Sowohl das erste als auch das zweite Medium 206, 208 sind beide mit dem Masseanschluss 204 verbunden. Deswegen heißt diese Phase parallele Phase. Allerdings fließt ins zweite Medium 208 kein Strom. Danach folgt der Freilauf, die sogenannte serielle Schaltphase, wie sie in Figur 3b gezeigt ist. In dieser Phase fließt der Strom über die zweite Schalteinrichtung 214 und das zweite Medium 208 in den Masseanschluss 204. In dieser Phase sind das erste und zweite Medium 206, 208 in Serie.

Beim Entladen werden die Schaltphasen umgekehrt durchlaufen. Zuerst wird die zweite Schalteinrichtung 214 eingeschaltet und der Strom fließt aus der Masse über das zweite Medium 208, die erste Drossel 210 und das erste Medium 206 in den Wandlereingang 202. Dann schaltet die zweite Schalteinrichtung 214 ab und als Freilauf dient die erste Schalteinrichtung 212. Im Freilauf fließt der Strom nur über die erste Schalteinrichtung 212, die erste Drossel 210 und das erste Medium 206.

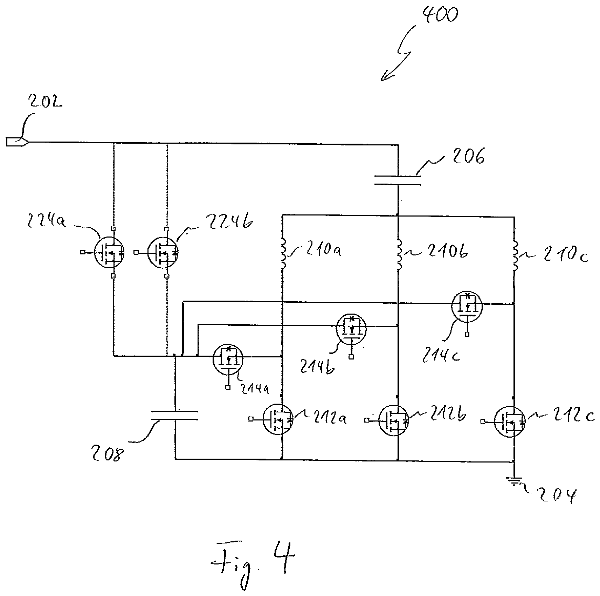

Figur 4 zeigt eine zweite Ausführungsform 400 eines erfindungsgemäßen Spannungswandlers. In Figur 4 sind die Elemente Wandlereingang 202, Masseanschluss 204 sowie erstes und zweites Medium 206, 208 mit denselben Bezugszeichen versehen wie in der ersten Ausführungsform und werden daher nicht nochmal erläutert. Die zweite Ausführungsform unterscheidet sich von der ersten Ausführungsform dadurch, dass sie für mehrere Phasen ausgelegt ist. So existieren auf drei unterschiedlichen Armen drei unterschiedliche erste Drosseln 210a, 210b und 210c. Jeder dieser Drosseln sind jeweils eine erste und zweite Schalteinrichtung 212a, 212b, 212c, 214a, 214b und 214c zugeordnet. Darüber hinaus existieren zwei dritte Schalteinrichtungen 224a und 224b.

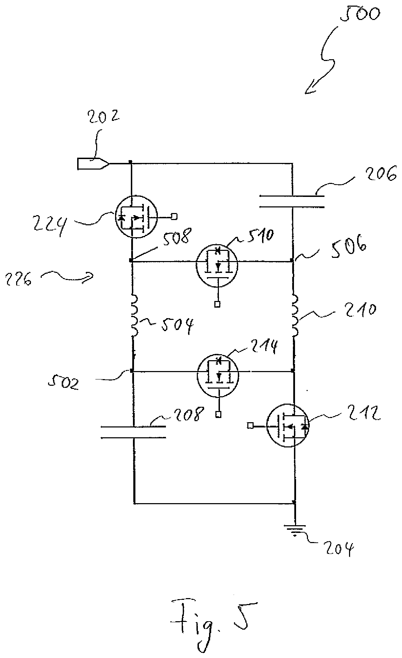

In Figur 5 ist eine dritte Ausführungsform 500 des erfindungsgemäßen Spannungswandlers gezeigt. Diese Ausführungsform soll im folgenden als K2-Dual-Spannungswandler bezeichnet werden. Die Elemente, die der ersten Ausführungsform (dem K2-Single-Spannungswandler) entsprechen, tragen dieselben Bezugszeichen und werden im Folgenden nicht noch einmal erläutert. Zusätzlich zu den Elementen des K2-Single-Spannungswandlers besitzt der K2-Dual-Spannungswandler weiterhin eine dritte Schalteinrichtung 224, eine vierte Schalteinrichtung 510 sowie eine zweite Drossel 504. Die dritte Schalteinrichtung 224 und die zweite Drossel 504 sind auf einem vierten Zweig 226 zwischen dem Wandlereingang 202 und einer zweiten Verzweigung 502 angeordnet. Zwischen ihnen existiert eine vierte Verzweigung 508, die über die vierte Schalteinrichtung 510 mit einer dritten Verzweigung 506 auf dem ersten Zweig verbunden ist. Der K2-Dual-Sannungswandler hat den Vorteil, dass die Leistungsverteilung zwischen dem ersten und zweiten Medium 206, 208 symmetrisch sein kann.

Die dritte Schalteinrichtung 224 lädt beziehungsweise entlädt parallel nur das zweite Medium 208, während die vierte Schalteinrichtung 510 fähig ist seriell sowohl das erste als auch das zweite Medium 206, 208 zu laden beziehungsweise zu entladen. Zwischen dem Schalterpaar 212 und 214 und dem Schalterpaar 224 und 510 kann ein Phasenversatz von einer halben Periode vorgesehen sein.

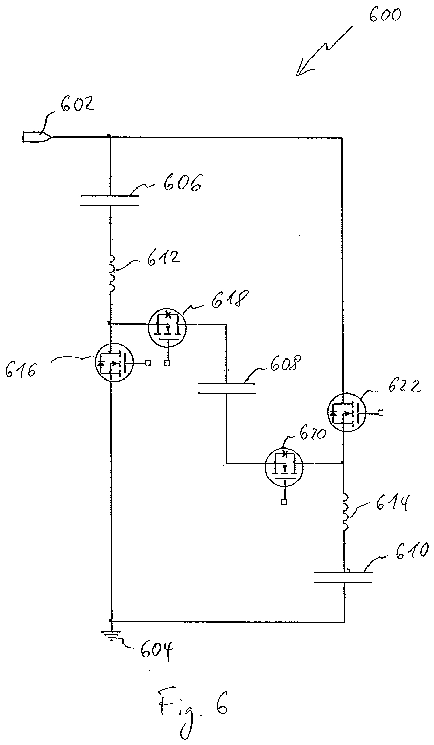

Figur 6 zeigt eine vierte Ausführungsform 600 eines erfindungsgemäßen Spannungswandlers. Diese Ausführungsform soll im Folgenden als K3-Single-A-Spannungswandler bezeichnet werden. Die gezeigte vierte Ausführungsform 600 des erfindungsgemäßen Spannungswandlers besitzt wiederum ein Schaltnetzwerk zwischen einem Wandlereingang 602 und einem Masseanschluss 604. Der K3-Single-A-Spannungswandler umfasst drei Medien 606, 608 und 610, zwei Drosseln 612 und 614 sowie vier Schalteinrichtungen 616, 618, 620 und 622. Prinzipiell entsprechen die Medien 606 und 608 dem ersten und zweiten Medium 206 und 208 der ersten Ausführungsform des Spannungswandlers. Des Weiteren korrespondiert die Drossel 612 mit der ersten Drossel 210 und die beiden Schalteinrichtungen 616 und 618 entsprechen der ersten und zweiten Schalteinrichtung 212 und 214 der ersten Ausführungsform. Der Anteil des Schaltnetzes unten rechts 608, 610, 614, 620 und 622 entspricht einer Spiegelung des Anteils des Schaltnetzes oben links 606, 608, 612, 616 und 618, wobei das Medium 608 von beiden Anteilen gemeinsam genutzt wird. Die Elemente 608, 610, 614, 620 und 622 können als eine Spiegelung der in Figur 2 gezeigten ersten Ausführungsform des erfindungsgemäßen Spannungswandlers aufgefasst werden.

Der K3-Single-A-Spannungswandler besitzt gegenüber dem K2-Single-Spannungswandler den Vorteil, dass er mehr Energie speichern kann und ein größeres Verhältnis zwischen erzeugter und speisender Spannung bereitstellen kann.

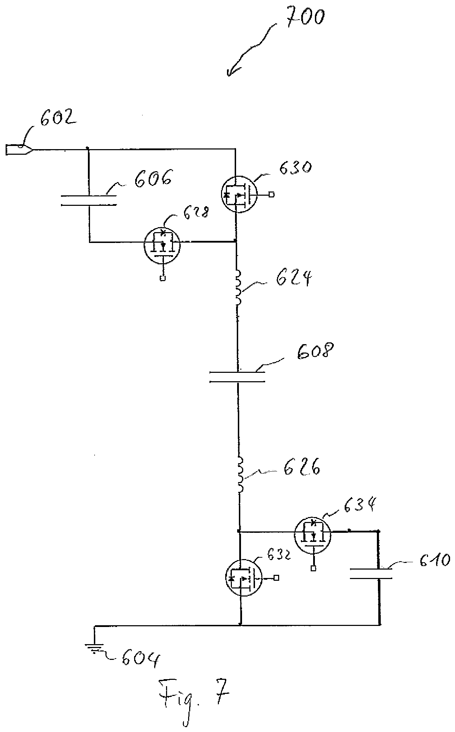

Figur 7 zeigt eine fünfte Ausführungsform 700 eines erfindungsgemäßen Spannungswandlers. Diese soll im Folgenden als K3-Single-B-Spannungswandler bezeichnet werden. Die gezeigte fünfte Ausführungsform 700 umfasst wiederum einen Wandlereingang 602 und einen Masseanschluss 604. Das Schaltnetz zwischen diesem Wandlereingang und dem Masseanschluss umfasst wiederum drei Medien 606, 608 und 610, zwei Drosseln 624 und 626 sowie vier Schalteinrichtung 628, 630, 632 und 634. Die Elemente 608, 610, 626, 632 und 634 entsprechen weitgehend dem K2-Single-Spannungswandler, wie er in Figur 2 dargestellt ist. Die Elemente 606, 608, 624, 628 und 630 entsprechen weitgehend einer Spiegelung des K2-Single-Spannungswandlers.

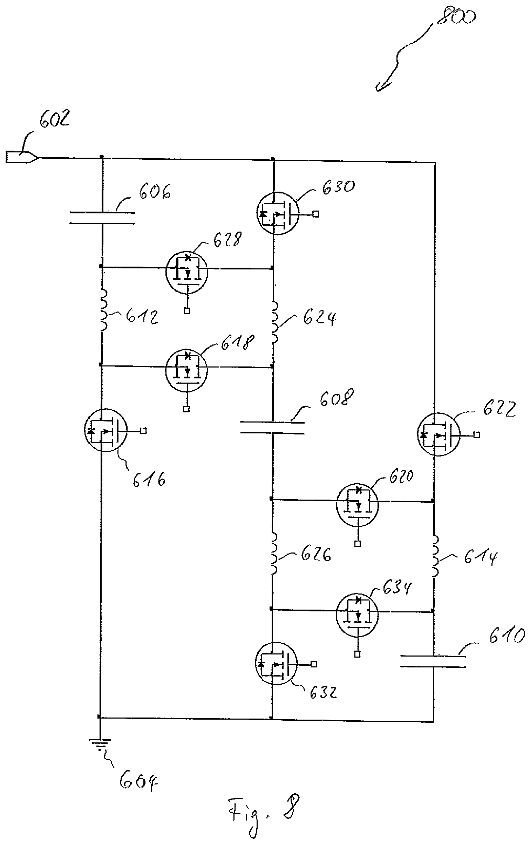

Figur 8 illustriert eine sechste Ausführungsform eines erfindungsgemäßen Spannungswandlers. Diese Ausführungsform 800 soll im Folgenden als K3-Dual-Spannungswandler bezeichnet werden. Die sechste Ausführungsform entspricht einer Kombination der vierten und fünften Ausführungsform. Die Elemente der sechsten Ausführungsform, die der vierten und fünften Ausführungsform entsprechen, tragen dasselbe Bezugszeichen und werden nicht noch einmal erläutert. Sowohl die Elemente 606, 608, 612, 616, 618, 624, 628 und 630 als auch die Elemente 608, 610, 614, 620, 622, 626, 632 und 634 entsprechen einem K2-Dual-Spannungswandler, wie er beispielsweise in Figur 5 dargestellt ist.

Der gezeigte K3-Dual-Spannungswandler hat die Vorteile, dass er im Vergleich zu einem K2-Dual-Spannungswandler mehr Energie speichern kann sowie ein größeres Verhältnis zwischen erzeugter und speisender Spannung zulässt. Wiederum ermöglicht der K3-Dual-Spannungswandler eine symmetrische Leistungsverteilung zwischen den Medien 606, 608 und 610.

Die mit Bezug auf die Figuren gemachten Ausführungen sind rein illustrativ und nicht beschränkend zu verstehen. Die in den Figuren gezeigten Ausführungsformen können verändert werden, ohne den Schutzumfang der beigefügten Ansprüche zu verlassen.

### Bezugszeichenliste

- 110: Spannungswandler nach dem Stand der Technik
- 112: Wandlereingang
- 114: Masse
- 116: Verzweigung
- 120: Drossel
- 122: Basisspeicherzweig
- 124: Basiskapazität
- 126: erster Schalter
- 128: Mittelabgriff
- 130: erstes Schalternetz
- 132: Ergänzungsspeicherzweig
- 134: erste Ergänzungskapazität
- 136: zweiter Schalter
- 138: zweiter Mittelabgriff
- 140: dritter Schalter
- 150: Steuerung
- 200: K2-Single-Spannungswandler
- 202: Wandlereingang
- 204: Masseanschluss
- 206: erstes Medium
- 208: zweites Medium
- 210: erste Drossel
- 212: erste Schalteinrichtung
- 214: zweite Schalteinrichtung
- 216: erster Zweig
- 218: erste Verzweigung
- 220: zweiter Zweig
- 222: dritter Zweig
- 224: dritte Schalteinrichtung
- 226: vierter Zweig
- 400: zweite Ausführungsform des erfindungsgemäßen Spannungswandlers
- 500: K2-Dual-Spannungswandler
- 502: zweite Verzweigung
- 504: zweite Drossel
- 506: dritte Verzweigung
- 508: vierte Verzweigung
- 510: vierte Schalteinrichtung
- 600: K3-Single-A-Spannungswandler
- 602: Wandlereingang
- 604: Masseanschluss
- 606: Medium
- 608: Medium
- 610: Medium
- 612: Drossel
- 614: Drossel
- 616: Schalteinrichtung
- 618: Schalteinrichtung
- 620: Schalteinrichtung
- 622: Schalteinrichtung
- 624: Drossel
- 626: Drossel
- 628: Schalteinrichtung
- 630: Schalteinrichtung
- 632: Schalteinrichtung
- 634: Schalteinrichtung
- 700: K3-Single-B-Spannungswandler
- 800: K3-Dual-Spannungswandler

## Patentansprüche

1. Spannungswandler umfassend
- einen Wandlereingang (202) zum Anlegen einer Eingangsspannung (U_{E}),
- einen Masseanschluss (204),
- ein erstes und zweites Medium (206, 208), welche zwischen dem Wandlereingang (202) und dem Masseanschluss (204) angeordnet sind,
wobei das erste und das zweite Medium zum Speichern und/oder Abgeben von Energie, die insbesondere als Kondensator, Batteriezelle, Solarzelle oder Brennstoffzelle ausgebildet sind,
- eine erste Drossel (210) sowie
- eine erste und zweite Schalteinrichtung (212, 214), wobei
- das erste Medium (206) und die erste Drossel (210) auf einem ersten Zweig (216) zwischen dem Wandlereingang (202) und einer ersten Verzweigung (218) derartig angeordnet sind, dass sich die Drossel (210) zwischen dem ersten Medium (206) und der ersten Verzweigung (218) befindet, und
- die erste Schalteinrichtung (212) auf einem zweiten Zweig (220) zwischen der ersten Verzweigung (218) und dem Masseanschluss (204) sowie
- die zweite Schalteinrichtung (214) und das zweite Medium (208) auf einem von dem zweiten Zweig (220) unterschiedlichen dritten Zweig (222) zwischen der ersten Verzweigung (218) und dem Masseanschluss (204) angeordnet sind,
**dadurch gekennzeichnet, dass** auf dem dritten Zweig (222) zwischen der zweiten Schalteinrichtung (214) und dem zweiten Medium (208) eine zweite Verzweigung (502) angeordnet ist, und
wobei zwischen dem Wandlereingang (202) und der zweiten Verzweigung (502) auf einem vierten Zweig (226) eine dritte Schalteinrichtung (224) angeordnet ist.

2. Spannungswandler nach Anspruch 1, mit einer Steuereinrichtung, die dazu eingerichtet ist, in einer ersten Schaltphase die erste Schalteinrichtung zu schließen und die zweite Schalteinrichtung zu öffnen und in einer zweiten Schaltphase die erste Schalteinrichtung zu öffnen und die zweite Schalteinrichtung zu schließen.

3. Spannungswandler nach Anspruch 1, wobei der vierte Zweig (226) weiterhin eine zweite Drossel (504) umfasst.

4. Spannungswandler nach Anspruch 3, wobei auf dem ersten Zweig (216) zwischen dem ersten Medium (206) und der ersten Drossel (210) eine dritte Verzweigung (506) und auf dem vierten Zweig (226) zwischen der dritten Schalteinrichtung (224) und der zweiten Drossel (504) eine vierte Verzweigung (508) angeordnet sind, wobei sich zwischen der dritten und vierten Verzweigung (506, 508) eine vierte Schalteinrichtung (510) befindet.

5. Spannungswandler nach einem der vorhergehenden Ansprüche, bei dem eine Position des Wandlereingangs und eine Position des Masseanschlusses miteinander vertauscht sind.

6. Spannungswandler (600, 700, 800), bei dem ein erster Spannungswandler (606, 608, 612, 616, 618, 624, 628, 630) nach einem der Ansprüche 1 bis 4 und ein zweiter Spannungswandler (608, 610, 614, 620, 622, 626, 632, 634) nach dem Anspruch 5 derartig miteinander kombiniert werden, dass ein Medium (608) durch den ersten und zweiten Spannungswandler gemeinsam genutzt wird und sowohl im ersten als auch im zweiten Spannungswandler entweder das erste oder das zweite Medium bildet.

7. Spannungswandler nach einem der vorhergehenden Ansprüche, wobei die Schalteinrichtungen aus jeweils einem MOSFET bestehen.

## Claims

1. A voltage converter comprising
- a converter input (202) for applying an input voltage (UE),
- a ground connection (204),
- a first and second medium (206, 208), arranged between the converter input (202) and the ground connection (204), wherein the first and the second medium are designed to store and/or release energy particularly as a capacitor, battery cell, solar cell or fuel cell,
- a first throttle (210) as well as
- a first and second switching device (212, 214), wherein
- the first medium (206) and the first throttle (210) are arranged on a first branch (216) between the converter input (202) and a first branching point (218) such that the throttle (210) is located between the first medium (206) and the first branching point (218), and
- the first switching device (212) is arranged on a second branch (220) between the first branching point (218) and the ground connection (204), and
- the second switching device (214) and the second medium (208) are arranged on a different third branch (222) from the second branch (220) between the first branching point (218) and the ground connection (204),
**characterized in that**
a second branching point (502) is arranged on the third branch (222) between the second switching device (214) and the second medium (208), and
wherein a third switching device (224) is arranged on a fourth branch (226) between the converter input (202) and the second branching point (502).

2. The voltage converter according to claim 1, comprising a control device which is designed to close the first switching device and open the second switching device in a first switching phase and to open the first switching device and close the second switching device in a second switching phase.

3. The voltage converter according to claim 1, wherein the fourth branch (226) further comprises a second throttle (504).

4. The voltage converter according to claim 3, wherein a third branching point (506) is arranged on the first branch (216) between the first medium (206) and the first throttle (210) and a fourth branching point (508) is arranged on the fourth branch (226) between the third switching device (224) and the second throttle (504), wherein a fourth switching device (510) is located between the third and fourth branching point (506, 508).

5. The voltage converter according to one of the preceding claims having an interchanged converter input position and ground connection position.

6. A voltage converter (600, 700, 800) having a first voltage converter (606, 608, 612, 616, 618, 624, 628, 630) according to one of claims 1 to 4 and a second voltage converter (608, 610, 614, 620, 622, 626, 632, 634) according to claim 5 combined together in such a way that a medium (608) is shared by the first and second voltage converter and forms either the first or the second medium in both the first as well as the second voltage converter.

7. The voltage converter according to one of the preceding claims, wherein the switching devices each consist of a MOSFET.

## Revendications

1. Convertisseur de tension comportant
- une entrée de convertisseur (202) pour appliquer une tension d'entrée (U_{E}),
- une borne de masse (204),
- un premier et un second milieu (206, 208) disposés entre l'entrée de convertisseur (202) et la borne de masse (204),
le premier et le second milieu étant destinés à stocker et/ou distribuer de l'énergie et étant réalisés en particulier sous forme de condensateur, de cellule de batterie, de cellule solaire ou de pile à combustible,
- une première réactance (210) ainsi que
- un premier et un second moyen de commutation (212, 214),
- le premier milieu (206) et la première réactance (210) étant disposés sur une première branche (216) entre une entrée de convertisseur (202) et une première ramification (218) de telle sorte que la réactance (210) se trouve entre le premier milieu (206) et la première ramification (218), et
- le premier moyen de commutation (212) étant disposé sur une seconde branche (220) entre la première ramification (218) et la borne de masse (204), et
- le second moyen de commutation (214) et le second milieu (208) étant disposés sur une troisième branche (222) différente de la seconde branche (220), entre la première ramification (210) et la borne de masse (204),
**caractérisé en ce que**
une seconde ramification (502) est disposée sur la troisième branche (222) entre le second moyen de commutation (214) et le second milieu (208), et un troisième moyen de commutation (224) est disposé sur une quatrième branche (226) entre l'entrée de convertisseur (202) et la seconde ramification (502).

2. Convertisseur de tension selon la revendication 1, comportant un moyen de commande qui est conçu pour fermer le premier moyen de commutation et ouvrir le second moyen de commutation dans une première phase de commutation, et pour ouvrir le premier moyen de commutation et fermer le second moyen de commutation dans une seconde phase de commutation.

3. Convertisseur de tension selon la revendication 1, dans lequel la quatrième branche (226) comprend en outre une seconde réactance (504).

4. Convertisseur de tension selon la revendication 3, dans lequel une troisième ramification (506) est disposée sur la première branche (216) entre le premier milieu (206) et la première réactance (210), et une quatrième ramification (508) est disposée sur la seconde branche (226) entre le troisième moyen de commutation (224) et la seconde réactance (504), un quatrième moyen de commutation (510) se trouvant entre la troisième et la quatrième ramification (506, 508).

5. Convertisseur de tension selon l'une des revendications précédentes, dans lequel une position de l'entrée de convertisseur et une position de la borne de masse sont échangées l'une contre l'autre.

6. Convertisseur de tension (600, 700, 800) dans lequel un premier convertisseur de tension (606, 608, 612, 616, 618, 624, 628, 630) selon l'une des revendications 1 à 4 et un second convertisseur de tension (608, 610, 614, 620, 622, 626, 632, 634) selon la revendication 5 sont combinés l'un avec l'autre de telle sorte qu'un milieu (608) est utilisé conjointement par le premier et par le second convertisseur de tension et constitue soit le premier soit le second milieu, aussi bien dans le premier que dans le second convertisseur de tension.

7. Convertisseur de tension selon l'une des revendications précédentes, dans lequel les moyens de commutation sont constitués chacun par un MOSFET.
